# EUROPEAN PATENT SPECIFICATION

(11) **EP 2 164 369 B1**
(45) Date of publication and mention of the grant of the patent: **27.04.2011**
(21) Application number: 08734741.5
(22) Date of filing: 25.03.2008
(51) Int. Cl.: A47J 27/21, B01D 35/143, C02F 1/00, C02F 1/02

(54) **A METHOD OF DETERMINING THE CONDITIONS OF EXHAUSTION OF THE FILTER CARTRIDGE IN A WATER HEATING OR THE LIKE, AND EQUIPMENT OPERATING ACCORDING TO THIS METHOD**
VERFAHREN ZUR BESTIMMUNG DER ERSCHÖPFUNG DER FILTERPATRONE IN EINEM WASSERKOCHER O. Ä. UND VERFAHRENSGEMÄSS FUNKTIONIERENDE AUSRÜSTUNG
PROCÉDÉ DE DÉTERMINATION DES CONDITIONS D'ÉPUISEMENT DE LA CARTOUCHE DE FILTRE DANS UN CHAUFFAGE À EAU OU SIMILAIRE, ET APPAREIL FONCTIONNANT SELON CE PROCÉDÉ

(30) Priority: 16.07.2007 IT PD20070240
(43) Date of publication of application: 24.03.2010
(73) Proprietor: Laica S.p.a., 36021 Barbarano Vicentino (IT)
(72) Inventor: MORETTO, Maurizio, I-36100 Vicenza (IT)
(74) Representative: Cantaluppi, Stefano
(86) International application number: PCT/EP2008/002330
(87) International publication number: WO 2009/010110

(56) References cited:
- EP-A- 0 788 397
- EP-A- 0 992 458
- EP-A- 1 589 325
- WO-A-00/66245
- WO-A-01/47399

## Description

### Technical field

The invention relates to a method of determining the conditions of exhaustion of the filter cartridge in a water heating device or the like, and to equipment operating according to this method.

### Technological background

In the technical field of devices for domestic use intended for filtering water for food use, in which filtering takes place by percolation through a filter cartridge, the problem arises of indicating to the user the conditions in which it is considered that the filter cartridge is exhausted and must therefore be immediately replaced. Since a device of this kind comprises a first portion for collecting the water to be filtered and a second portion for collecting the filtered water, it is customary to monitor the filling cycles of one or other portion by means of suitable detectors of the presence of water, associated with a counting device. A typical device in this field is that described in EP 1 589 325, which has one or more electrodes positioned in one of the portions in such a position that an open circuit is present between them in the absence of water, this circuit being closed when water is introduced into the portion.

There is also a known method, described for example in EP 0 788 397, of counting a parameter which is different from the presence of water in the portions, but which signifies this fact. In the above example, the cycles of removal and/or repositioning of the lid of a portion are counted, on the assumption that in each of these cycles the portion is filled with water to be filtered. In all these cases, however, it is necessary to provide and install in the equipment relatively complex means of monitoring the actions correlated with the filling of one of the portions in order to determine, using counting means, whether such a situation has been reached that it is advisable to replace the filter cartridge. This whole arrangement is expensive, relatively complex, rather imprecise and subject to problems of malfunctioning.

### Description of the invention

The technical problem to be resolved by the present invention is that of providing a method and equipment whose structural and functional design is such that all the difficulties of the aforementioned prior art can be overcome.

The fundamental principle of the present invention is that there are particular types of equipment, such as water heating devices, for example those used for preparing tea, infusions and coffee, or simple kettles, in which the conditions of exhaustion of the cartridge can be monitored in a much simpler way by counting the water heating cycles, instead of the cycles of filling the collecting portions of the equipment.

The method is particularly simplified and efficient when a significant value of the number of filter cycles which the cartridge has undergone is determined as a function of one or more of the following parameters:
- the activation or inactivation of an electrical circuit associated with the heating equipment
- the emission of steam inside the equipment
- the overheating of the water in the equipment above a predetermined temperature threshold.

In order to count the water filtering cycles by monitoring the activation and/or inactivation of the electrical circuit associated with the heating equipment, it is sufficient to monitor the flow of current in the circuit itself, which can be done in a very simple and economical way.

### Brief description of the drawings

Further features and advantages of the invention will become clear from the detailed description of some preferred examples of embodiment thereof, illustrated, for the purposes of guidance and without restrictive intent, with reference to the appended drawings, in which:

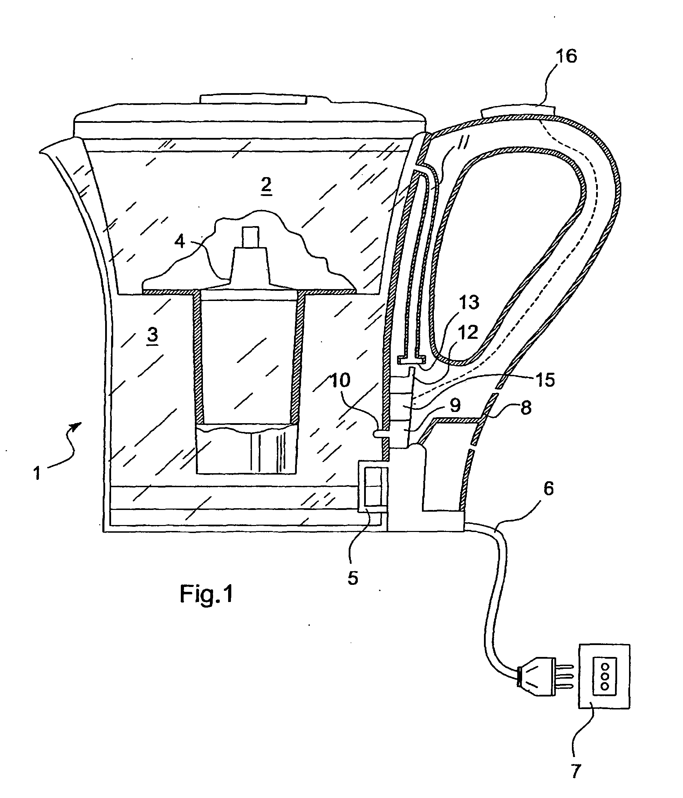

- Figure 1 is a schematic sectional view of an electric kettle made according to the present invention.

### Preferred embodiment of the invention

In the drawing, the number 1 indicates the whole of a piece of water heating equipment for domestic use, such as an electric kettle, including a first portion 2 for collecting the water to be filter and a second portion 3 for collecting the filtered water, these portions communicating with each other through a passage in which a filter cartridge 4 is removably housed. Depending on the type of equipment, the portions can be replaced by corresponding pipes positioned respectively upstream and downstream of the filter cartridge, in such a way that the water to be filtered flows through the filter cartridge 4 before use. In all cases, the cartridge is liable to become exhausted and will have to be replaced after a predetermined number of filter cycles.

The equipment 1 also comprises an electrical resistance 5 supplied through a cable 6 from the mains outlet 7 under the control of a switch 8. The resistance 5 is associated with the portion 3 for collecting the filter water, for the purpose of heating the water. The switch 8 can be of the pulse type, in which a single electrical pulse starts a heating cycle of predetermined duration, or of a conventional type. A thermostat 9 provided with a sensor 10 is also associated with the portion 3 for collecting the filtered (and heated) water, for the thermostatic control of the water.

Also provided is a safety control device which uses an overflow pipe 11 for the steam from the portion 3 to activate a switch 12, operated by a membrane 13, to cut off the electricity supply to the resistance 5 if the steam pressure is excessive.

The operation of the equipment 1 is as follows. The water introduced into the first portion 2 is filtered through the cartridge 4 and is collected in the second portion 3. It is then heated and used for the preparation of the desired beverages. The heating is carried out by activating the electrical resistance 5 by means of an electrical pulse generated by the switch 8. The inactivation is carried out by means of the thermostat 9, when a predetermined temperature is reached, or by means of a timer or alternatively by means of the safety control device, when the steam generated acts on the membrane 13 operating the switch 12. A counter 15 is activated and incremented simultaneously with any one of the aforesaid functions, and increments the count of water heating cycles by one unit for the purpose of determining the number of filter cycles completed by the cartridge 4 from the time of its installation.

A display 16 is connected to the counter 15 to display a numeric, visual or combined value indicating the number of heating cycles carried out by the resistance 5 and consequently the number of filter cycles executed by the cartridge 4.

When the maximum recommended number of cycles for the cartridge 4 has been reached, the display 16 indicates that the conditions of exhaustion of the cartridge have been reached, and that it is therefore necessary to replace it.

In practice, therefore, the count made by the counter 15 is incremented whenever a heating cycle of the water in the equipment 1 is carried out, this cycle being detected as a function of one or more of the following parameters:
- the activation or inactivation of an electrical circuit associated with the heating equipment
- the emission of steam inside the equipment
- the overheating of the water in the equipment above a predetermined temperature threshold.

There are many advantages yielded by this method, a particularly significant advantage being that the conditions of exhaustion of the filter cartridge are monitored in a simple way, using devices normally present in the equipment and normally subject to an activation/inactivation cycle executed whenever the first portion has been filled with a new quantity of water to be filtered. The counting is indirect but still indicative of the exhaustion of the cartridge, and is carried out easily at very low cost.

## Claims

1. A method of determining the conditions of exhaustion of the filter cartridge (4) in water heating equipment (1) or the like, comprising the step of expressing a significant value of the number of filter cycles which the cartridge has undergone in order to indicate a condition of exhaustion of the cartridge when the said significant value reaches or exceeds a predetermined value, **characterized in that** the said significant value is determined as a function of the number of heating cycles of the water in the said equipment (1).

2. A method of determining the conditions of exhaustion of the filter cartridge (4) according to Claim 1, in which the number of heating cycles is determined as a function of one or more of the following parameters:
- the activation or inactivation of an electrical circuit associated with the heating equipment (1)
- the emission of steam inside the equipment (1)
- the overheating of the water in the equipment (1) above a predetermined temperature threshold.

3. A method of determining the conditions of exhaustion of the filter cartridge (4) according to Claim 2, in which the electrical circuit associated with the equipment is the circuit used for heating the water.

4. A method of determining the conditions of exhaustion of the filter cartridge (4) according to Claim 2, in which the emission of steam is detected by means of a membrane (13) control device associated with a steam passage (11) of the equipment (1).

5. A method of determining the conditions of exhaustion of the filter cartridge (4) according to Claim 2, in which the overheating of the water is detected by means of a thermostatic control device (9, 10) associated with the equipment (1).

6. A method of determining the conditions of exhaustion of the filter cartridge (4) according to Claim 5, in which the said thermostatic control device (9, 10) is the control device associated with the control of the water heating.

7. Water heating equipment (1) with replaceable cartridge (4), comprising a portion (2) for collecting the filtered water and means of heating the water collected in the said portion, and additionally comprising means of determining the conditions of exhaustion of the filter cartridge (4) by expressing a significant value of the numbers of filter cycles which the cartridge (4) has undergone and by indicating a condition of exhaustion of the cartridge (4) when the said significant value reaches or exceeds a predetermined value, **characterized in that** the said means of determining the conditions of exhaustion of the cartridge comprise a device (15) for counting the number of water heating cycles in the said equipment.

8. Equipment (1) according to Claim 7, in which the said counting device (15) is designed to detect one or more of the following parameters:
- the activation or inactivation of an electrical circuit associated with the heating equipment
- the emission of steam inside the equipment
- the overheating of the water in the equipment above a predetermined temperature threshold.

9. Equipment according to Claim 8, in which the electrical circuit associated with the equipment is the circuit used for heating the water.

10. Equipment according to Claim 8, in which the overheating of the water is detected by means of a thermostatic control device (9, 10) associated with the equipment (1).

11. Equipment according to Claim 10, in which the said thermostatic control device (9, 10) is the device associated with the control of the water heating.

## Patentansprüche

1. Verfahren zum Bestimmen der Bedingungen des Verbrauchtseins der Filterkartusche (4) in einer Wasserheizvorrichtung (1) oder dergleichen, umfassend den Schritt des Ausgebens eines spezifischen Werts der Anzahl von Filterzyklen, die die Kartusche durchgeführt hat, um eine Bedingung des Verbrauchtseins der Kartusche anzuzeigen, wenn dieser spezifische Wert einen vorbestimmten Wert erreicht oder übersteigt, **dadurch gekennzeichnet, dass** der spezifische Wert als eine Funktion der Anzahl von Heizzyklen des Wassers in der Vorrichtung (1) bestimmt wird.

2. Verfahren zum Bestimmen der Bedingungen des Verbrauchtseins der Filterkartusche (4) nach Anspruch 1, wobei die Anzahl der Heizzyklen als eine Funktion eines oder mehrerer der folgenden Parameter bestimmt wird:
- die Aktivierung oder Deaktivierung einer elektrischen Schaltung, die mit der Heizvorrichtung (1) verbunden ist
- der Ausstoß von Dampf innerhalb der Vorrichtung (1)
- das Überhitzen des Wassers in der Vorrichtung (1) über einen vorbestimmten Temperaturschwellenwert.

3. Verfahren zum Bestimmen der Bedingungen des Verbrauchtseins der Filterkartusche (4) nach Anspruch 2, wobei die mit der Vorrichtung verbundene elektrische Schaltung die Schaltung ist, die zum Erhitzen des Wassers verwendet wird.

4. Verfahren zum Bestimmen der Bedingungen des Verbrauchtseins der Filterkartusche (4) nach Anspruch 2, wobei der Ausstoß von Dampf mittels einer Membransteuervorrichtung (13), die mit einem Dampfdurchgang (11) der Vorrichtung (1) verbunden ist, erfasst wird.

5. Verfahren zum Bestimmen der Bedingungen des Verbrauchtseins der Filterkartusche (4) nach Anspruch 2, wobei das Überhitzen des Wassers mittels einer Thermostatsteuervorrichtung (9, 10), die mit der Vorrichtung (1) verbunden ist, erfasst wird.

6. Verfahren zum Bestimmen der Bedingungen des Verbrauchtseins der Filterkartusche (4) nach Anspruch 5, wobei die Thermostatsteuervorrichtung (9, 10) die Steuervorrichtung ist, die mit der Steuerung der Wassererhitzung in Verbindung steht.

7. Wasserheizvorrichtung (1) mit austauschbarer Kartusche (4), umfassend einen Bereich (2) zum Sammeln des gefilterten Wassers und eine Einrichtung zum Erhitzen des Wassers, das in dem Bereich gesammelt wurde, und zusätzlich umfassend eine Einrichtung zum Bestimmen der Bedingungen des Verbrauchtseins der Filterkartusche (4) durch Ausgebens eines spezifischen Werts der Anzahl von Filterzyklen, die die Kartusche (4) durchgeführt hat, und durch Anzeigen einer Bedingung des Verbrauchtseins der Kartusche (4), wenn dieser spezifische Wert einen vorbestimmten Wert erreicht oder übersteigt, **dadurch gekennzeichnet, dass** die Vorrichtung zum Bestimmen der Bedingungen des Verbrauchtseins der Kartusche eine Vorrichtung (15) zum Zählen der Anzahl von Wasserheizzyklen in der Vorrichtung umfasst.

8. Vorrichtung (1) nach Anspruch 7, wobei die Zählvorrichtung (15) ausgelegt ist, einen oder mehrere der folgenden Parameter zu erfassen:
- die Aktivierung oder Deaktivierung einer elektrischen Schaltung, die mit der Heizvorrichtung verbunden ist
- der Ausstoß von Dampf innerhalb der Vorrichtung
- das Überhitzen des Wassers in der Vorrichtung über einen vorbestimmten Temperaturschwellenwert.

9. Vorrichtung nach Anspruch 8, wobei die mit der Vorrichtung verbundene elektrische Schaltung die Schaltung ist, die zum Erhitzen des Wassers verwendet wird.

10. Vorrichtung nach Anspruch 8, wobei das Überhitzen des Wassers mittels einer Thermostatsteuervorrichtung (9, 10), die mit der Vorrichtung (1) verbunden ist, erfasst wird.

11. Vorrichtung nach Anspruch 10, wobei die Thermostatsteuervorrichtung (9, 10) die Vorrichtung ist, die mit der Steuerung der Wassererhitzung in Verbindung steht.

## Revendications

1. Procédé de détermination des états d'épuisement de la cartouche de filtre (4) dans un équipement de chauffage d'eau (1) ou autre, comprenant l'étape consistant à exprimer une valeur significative du nombre de cycles de filtrage que la cartouche a subi afin d'indiquer un état d'épuisement de la cartouche quand ladite valeur significative atteint ou dépasse une valeur prédéterminée, **caractérisé en ce que** ladite valeur significative est déterminée comme une fonction du nombre de cycles de chauffage de l'eau dans ledit équipement (1).

2. Procédé de détermination des états d'épuisement de la cartouche de filtre (4) selon la revendication 1, dans lequel le nombre de cycles de chauffage est déterminé comme une fonction d'un ou plus des paramètres suivants :
- l'activation ou l'inactivation d'un circuit électrique associé avec l'équipement de chauffage (1)
- l'émission de vapeur à l'intérieur de l'équipement (1)
- la surchauffe de l'eau dans l'équipement (1) au-dessus d'un seuil de température prédéterminé.

3. Procédé de détermination des états d'épuisement de la cartouche de filtre (4) selon la revendication 2, dans lequel le circuit électrique associé à l'équipement est le circuit utilisé pour chauffer l'eau.

4. Procédé de détermination des états d'épuisement de la cartouche de filtre (4) selon la revendication 2, dans lequel l'émission de vapeur est détectée au moyen d'un dispositif de contrôle à membrane (13) associé à un passage de vapeur (11) de l'équipement (1).

5. Procédé de détermination des états d'épuisement de la cartouche de filtre (4) selon la revendication 2, dans lequel la surchauffe de l'eau est détectée au moyen d'un dispositif de contrôle thermostatique (9, 10) associé à l'équipement (1).

6. Procédé de détermination des états d'épuisement de la cartouche de filtre (4) selon la revendication 5, dans lequel ledit dispositif de contrôle thermostatique (9, 10) est le dispositif de contrôle associé au contrôle du chauffage d'eau.

7. Equipement de chauffage d'eau (1) à cartouche (4) remplaçable, comprenant une partie (2) pour collecter l'eau filtrée et des moyens de chauffage de l'eau collectée dans ladite partie, et comprenant en outre des moyens de détermination des états d'épuisement de la cartouche de filtre (4) en exprimant une valeur significative des nombres de cycles de filtrage que la cartouche (4) a subi et en indiquant un état d'épuisement de la cartouche (4) quand ladite valeur significative atteint ou dépasse une valeur prédéterminée, **caractérisé en ce que** lesdits moyens de détermination des états d'épuisement de la cartouche comprennent un dispositif (15) pour compter le nombre de cycles de chauffage d'eau dans ledit équipement.

8. Equipement (1) selon la revendication 7, dans lequel ledit dispositif de comptage (15) est conçu pour détecter un ou plus des paramètres suivants :
- l'activation ou l'inactivation d'un circuit électrique associé à l'équipement de chauffage
- l'émission de vapeur à l'intérieur de l'équipement
- la surchauffe de l'eau dans l'équipement au-dessus d'un seuil de température prédéterminé.

9. Equipement selon la revendication 8, dans lequel le circuit électrique associé à l'équipement est le circuit utilisé pour chauffer l'eau.

10. Equipement selon la revendication 8, dans lequel la surchauffe de l'eau est détectée au moyen d'un dispositif de contrôle thermostatique (9, 10) associé à l'équipement (1).

11. Equipement selon la revendication 10, dans lequel ledit dispositif de contrôle thermostatique (9, 10) est le dispositif associé au contrôle du chauffage d'eau.
